# EUROPÄISCHE PATENTSCHRIFT

(11) **EP 1 440 923 B1**
(45) Veröffentlichungstag und Bekanntmachung des Hinweises auf die Patenterteilung: **29.04.2009**
(21) Anmeldenummer: 04000905.2
(22) Anmeldetag: 16.01.2004
(51) Int. Cl.: B65G 57/24, B65H 29/34, B65H 33/16

(54) **Anordnung und Verfahren zum sortierten Abstapeln von in Form und/oder Grösse unterschiedlicher Lagen aus blattförmigen Materialien**
Arrangement and method for selective stacking signatures having different sizes and/or forms
Agencement et procédé pour l'empilage sélectif de rames de tailles et/ou de formes différentes

(30) Priorität: 24.01.2003 DE 10302953
(43) Veröffentlichungstag der Anmeldung: 28.07.2004
(73) Patentinhaber: Baumann Maschinenbau Solms GmbH & Co. KG, 35606 Solms (DE)
(72) Erfinder: Schmitt, Berthold, 35638 Leun (DE); Assmann, Volkmar, 35768 Siegbach (DE)
(74) Vertreter: Schmidt, Ursula

(56) Entgegenhaltungen:
- EP-A- 1 375 388
- DE-A- 10 201 609
- US-A- 5 716 189

## Beschreibung

Die Erfindung betrifft eine Anordnung zum sortierten Abstapeln von in Form und/oder Größe unterschiedlicher Lagen aus blattförmigen Materialien, insbesondere zum Abstapeln von Papierlagen nach dem Beschneiden in einer Schneidemaschine, im Wesentlichen bestehend aus einer Bearbeitungsmaschine, einer Abladerstation mit einem horizontal- und vertikal verfahrbaren Abladertisch und mehreren Aufnahmepaletten für die Lagen zur Bildung eines Stapels, wobei wenigstens ein Teil der Aufnahmepaletten mittels einer Steuerung automatisch horizontal verfahrbar ausgebildet ist und die Aufnahmepaletten in eine vorgegebene Abladeposition des Abladertisches und nach wenigstens einem Abladevorgang wieder in Ausgangsstellung zurück verfahren.

Die Erfindung betrifft des Weiteren eine Anordnung zum sortierten Abstapeln von in Form und/oder Größe unterschiedlicher Lagen aus blattförmigen Materialien, insbesondere zum Abstapeln von Papierlagen nach dem Beschneiden in einer Schneidemaschine, im Wesentlichen bestehend aus einer Bearbeitungsmaschine, einer stationär angeordneten Abladerstation mit einem horizontal und vertikal verfahrbaren Abladertisch und mehreren Aufnahmepaletten für die Lagen zur Bildung eines Stapels, wobei wenigstens ein Teil der Aufnahmepaletten mittels einer Steuerung automatisch horizontal verfahrbar ausbildet ist.

Die Erfindung betrifft außerdem ein Verfahren zum sortierten Abstapeln von in Form und/oder Größe unterschiedlicher Lagen aus blattförmigen Materialien, insbesondere zum Abstapeln von Papierlagen nach dem Beschneiden in einer Schneidemaschine, bei dem jeweils eine auf einem Abladertisch einer horizontal verfahrbaren Abladerstation fixierte Lage auf eine dieser Lage zugeordnete Aufnahmepalette oder einem bereits darauf befindlichen Materialstapel positionsgenau abgeladen wird.

Derartige Anordnungen sowie zugehörige Verfahren sind bereits aus der Druckschrift DE 102 01 609.7 bekannt. Hiernach ist ein Sortierregal zwischen der Schneidemaschine und dem Ablader angeordnet, dass vertikal verfahrbare Aufnahmeböden aufweist, in die die Bedienperson die beschnittenen Lagen einsortiert und nach dem Befüllen des Sortierregals jeweils eine Lage auf den Abladertisch auflegt. Diese werden sodann von zwei am Ablader angeordneten Anschlägen ergriffen und fixiert. Der Ablader, der horizontal entlang einer Reihe Abladepaletten verfahrbar ausgebildet ist, fährt gesteuert in Abladeposition, dass heißt, der Abladertisch wird oberhalb der Abladepalette positioniert, auf der die Lage abgestapelt werden soll. Die Abladepaletten stehen einreihig aneinandergereiht im Wirkungsfeld des Abladertisches. Der Abladertisch wird unmittelbar über den bereits abgeladenen Lagenstapel abgesenkt und seitlich weggezogen, so dass die Lage positionsgenau auf der Abladepalette oder den bereits vorhandenen Stapel aufgelegt wird.

Nachteilig an dieser Lösung ist, dass der eigentliche Abladevorgang nicht voll automatisiert erfolgen kann, da das Bedienpersonal das Sortierregal von Hand befüllen und auch wieder entleeren muss. Des Weiteren ist von Nachteil, dass stets in vorgegebener Reihenfolge abgeladen werden muss. Die von der Ausgangsposition des Abladers am weitesten entfernt angeordnete Abladepalette muss immer den höchsten Materialstapel aufweisen. Die Stapelhöhe der einzelnen Abladepaletten muss sich stufenartig zur Ausgangsposition des Abladers hin verringern. Eine variable Reihenfolge des Abladers auf die bereitstehenden Abladepaletten ist nicht möglich.

US-A-5716 189 offenbart eine Vorrichtung zur Zusammenstellung von Stapeln aus unterschiedlichen Materialien, mit unterschiedlicher Größe oder von verschiedenen Bearbeitungsstationen kommend und zum Abstapeln der zusammengestellten Stapel auf dafür vorgesehene Paletten. Dabei werden die unterschiedlichen Stapel von den Bearbeitungsmaschinen über Förderbänder auf die Arbeitsfläche der Vorrichtung abgelegt, von wo sie sortiert durch einen Schiebemechanismus auf die Transportplatte geschoben werden. Die Transportplatte verfährt sodann in Abladeposition über die Palette, auf die der Stapel abgelegt werden soll und wird auf diese oder auf bereits darauf befindliche Materialstapel abgesetzt. Die Paletten sind reihenweise hintereinander auf einem Schienen- oder Rollensystem angeordnet und werden so angesteuert, dass die Palette, auf die der Stapel abgesetzt werden soll, positionsgenau unter die Transportplatte verfahren werden kann. Der abzusetzende Stapel wird von zwei seitlichen Anschlägen fixiert und nach dem Absetzen auf der Palette wird die Transportplatte nach hinten verfahren und so vom abzusetzenden Stapel entfernt. Die Transportplatte und auch die Anschläge verfahren anschließend wieder in ihre Ausgangsposition.

Die Anordnung, bzw. das Verfahren, zum sortierten Abstapeln von Lagen aus blattförmigen Material der US-A-5 716 189 entspricht dem Oberbegriff der Ansprüche 1 und 2, bzw. dem Oberbegriff des Anspruchs 12.

Nachteilig an dieser Lösung ist der große Platzbedarf für die Bereitstellung der Paletten, da bei jedem Abladevorgang die Paletten gemeinsam verfahren und neu positioniert werden müssen, so dass beidseitig der Transportplatte genügend Platz für die restliche Palettenkette vorhanden sein muss.

Es ist deshalb Aufgabe der Erfindung, eine Abladeanordnung so weiterzubilden, dass ein variables, zeitsparendes und positionsgenaues Abstapeln auf eine der bereitstehenden Aufnahmepaletten zum sortierten Abladen von Lage unterschiedlicher Form und/oder unterschiedlicher Größe ermöglicht wird.

Es ist des Weiteren Aufgabe der Erfindung, ein Verfahren zum sortierten Abladen von in Form und/oder Größe unterschiedlicher Lagen so weiterzuentwickeln, dass der eigentliche Abladevorgang vollständig automatisiert erfolgt.

Die erfindungsgemäße Aufgabe wird anordnungsseitig dadurch gelöst, dass die Abladerstation entlang der außerhalb ihres Wirkungsbereiches aneinander gereihten Aufnahmepaletten horizontal verfahrbar ausgebildet ist.

Mit dieser erfindungsgemäßen Abladeanordnung wird ein variables Abladen von sortierten Lagen auf die ihnen zugeordneten Aufnahmepaletten ermöglicht. Jede Abladepalette kann eine unterschiedliche Stapelhöhe aufweisen, da immer nur die Abladepalette in den Wirkungsbereich der Abladerstation gelangt, auf die abgeladen werden soll. Im Umfeld der Aufnahmepalette ist genügend Platz vorhanden, um den Abladertisch seitlich unter der Lage hervorziehen zu können.

Da das Bereitstellen der jeweiligen Aufnahmepaletten gleichzeitig mit dem Verfahrvorgang der Abladerstation erfolgt, kann mit minimalem Zeitaufwand abgestapelt werden.

Die erfindungsgemäße Aufgabenstellung wird anordnungsseitig des weiteren dadurch gelöst, dass bei Einsatz einer stationär angeordneten Abladerstation die Aufnahmepaletten sternförmig angeordnet und derart verfahrbar ausgebildet sind, dass die der abzuladenden Lage zugeordnete Aufnahmepalette automatisch in vorgegebene Abladeposition des Abladertisches verbracht beziehungsweise nach wenigstens einem Abladevorgang in Ausgangsstellung zurück verfahren wird.

Diese Anordnung der Aufnahmepaletten ist besonders Platz sparend.

Konstruktiv von Vorteil ist, wenn die Aufnahmepalette, die den größten Abstand zur Abladerstation aufweist, stationär ausgebildet und im Wirkungsbereich der horizontal verfahrbaren Abladerstation angeordnet ist.

Die in der Reihenfolge letzte Aufnahmepalette kann unabhängig von der Stapelhöhe im Wirkungsbereich der Abladerstation in Abladeposition angeordnet sein, da sie die weiteren Abladevorgänge auf andere Aufnahmepaletten nicht behindert.

Um die Verfahrbarkeit der Aufnahmepaletten konstruktiv einfach realisieren zu können, sind erfindungsgemäß unterschiedliche Ausführungen vorgesehen.

So können die Aufnahmepaletten mittels Schlittenführung verfahrbar ausgebildet sein.

Eine der vielfältigen weiteren Ausführungen ist, die Aufnahmepalette mittels Rollenführung verfahrbar auszubilden.

Je nach Einsatz bekannter Abladerstationen als N- oder H-Typ ist die Abladerposition eine vorgegebene Position unter dem Abladertisch oder neben dem Abladertisch. Der Einsatz beider Abladerstationen ist möglich und erfindungsgemäß vorgesehen.

Konstruktiv einfach und kostengünstig ist es, wenn die Stapelhöhe der Aufnahmepaletten mittels einer Sensoranordnung erfasst wird.

Um den eigentlichen Abladevorgang vollständig automatisiert ausführen zu können, ist nach einer weiteren vorteilhaften Ausführung der erfindungsgemäßen Lösung vorgesehen, dass zwischen Bearbeitungsmaschine und Abladerstation ein Sortierregal zum sortierten Zwischenlagern der in Form und/oder Größe unterschiedlichen Lagen angeordnet ist.

Dabei ist das Sortierregal derart ausgebildet, dass es aus vier Aufnahmeböden besteht, die in zwei übereinander angeordneten Ebenen in einem Gestell angeordnet sind, dass die in beiden Ebenen diagonal zueinander angeordneten Aufnahmeböden miteinander in Wirkverbindung stehen und dass die Aufnahmeböden automatisch umlaufend ausgebildet sind.

Ein derartiges Sortierregal offenbart DE 102 28 165.3. Diese Lösung kann auf vorteilhafte Weise in die erfindungsgemäße Abladeanordnung integriert werden.

Zur Realisierung der vollautomatischen Abladevorgänge ist des weiteren von Vorteil, wenn die Abladerstation zwei abstandsweise und parallel zueinander angeordnete, variabel ein- und feststellbare sowie horizontal und vertikal verfahrbare Anschläge zum Ergreifen jeweils einer bearbeiteten Lage, zum Transport zur und zum Ablegen auf dem Abladertisch, aufweist.

Die erfindungsgemäße Aufgabe wird des Weiteren verfahrensseitig dadurch gelöst, dass gleichzeitig mit dem Verfahren der Abladerstation entlang der außerhalb ihres Wirkungsbereiches aneinander gereihten Aufnahmepaletten in Abladeposition auch die der abzuladenden Lage zugeordnete Aufnahmepalette in Abladeposition verfährt und nach wenigstens einem Abladevorgang die Aufnahmepalette wieder in Ausgangsstellung außerhalb des Wirkungsbereiches der Abladerstation verfährt.

Mit diesem erfindungsgemäßen Verfahren wird erreicht, dass bereits vorsortierte Lagen schnell und automatisiert auf die Aufnahmepalette abgesetzt werden, die der jeweiligen Lage zugeordnet ist. Es muss keine vorgegebene Reihenfolge des Absetzens eingehalten werden. Möglich ist es auch, mehrere Lagen gleicher Form und/oder Größe nacheinander auf die gleiche Aufnahmepalette abzusetzen, bevor diese wieder aus der Abladeposition in Ausgangsposition verfahren wird.

Zum Erreichen vollautomatischer Abladevorgänge ist vorzugsweise des Weiteren vorgesehen, dass nach dem Bearbeiten die Lagen in einem Sortierregal sortiert abgelegt werden und dass die Lagen zum Abstapeln automatisch auf den Abladertisch der Abladerstation aufgelegt werden.

Dabei werden die Lagen auf ein Sortierregal aufgelegt, dessen Aufnahmeböden umlaufend angeordnet sind. Die Lagen werden anschließend in Abnahmeposition verfahren, von verfahrbaren Anschlägen der Abladerstation ergriffen, fixiert und auf den Abladertisch transportiert.

Manuelles Auflegen der einzelnen Lagen auf den Abladertisch ist nicht mehr notwendig. Der Bediener muss nur noch den Beschickungsvorgang zum sortierten Ablegen der Einzelnutzen in das Sortierregal von Hand ausführen. Der Transport der Lagen in eine solche Position, die das Ergreifen der Lage durch die Anschläge der Abladerstation ermöglicht, geschieht bereits automatisch, angesteuert von der zentralen Steuereinheit.

Die Erfindung soll nachfolgend anhand von Ausführungsbeispielen, die das sortierte Abladen von in einer Schneidanlage beschnittenen, bedruckten Papiernutzen, die unterschiedliche Form aufweisen und in einem Sortierregal entsprechend ihrer Größe in Lagen abgelegt sind, beschreiben, näher erläutert werden. Die zugehörige Zeichnung zeigt dabei in
- Fig. 1: die Draufsicht auf eine Schneidanlage mit erfindungsgemäßer Abladeanordnung, bei der die Abladerstation verfahrbar ausgebildet ist, in prinzipieller Darstellung,
- Fig. 2: Schnitt A - A nach Fig. 1,
- Fig. 3: eine prinzipielle Darstellung einer Abladeanordnung bei Einsatz einer stationär angeordneten Abladerstation, welche Abladeanordnung kein Teil der vorliegenden Erfindung ist;
- Fig. 4: die Darstellung nach Fig. 3 bei veränderter Aufnahmepalettenposition und
- Fig. 5: die Darstellung nach Fig. 3 in nochmals veränderter Aufnahmepalettenposition.

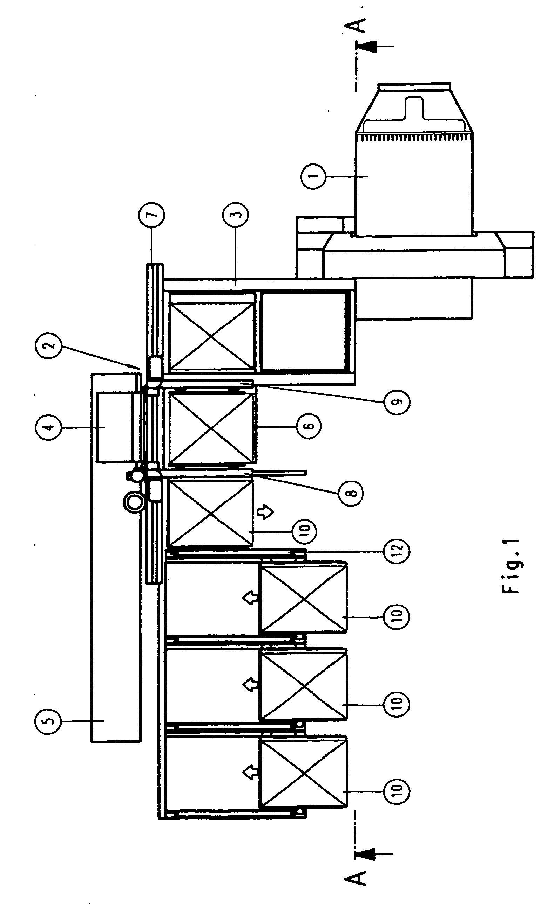

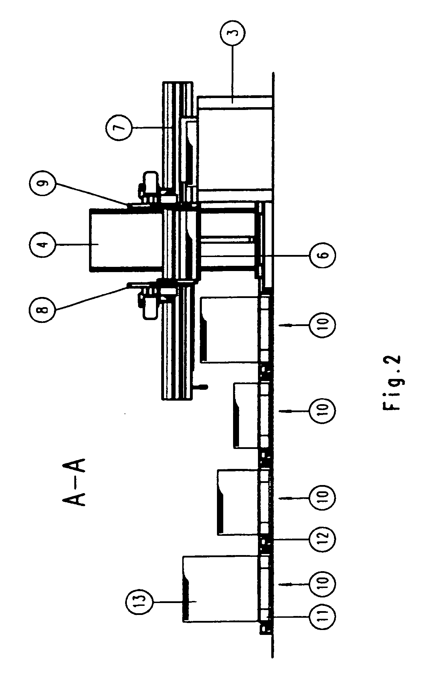

Nach den Fig. 1 und 2 ist zwischen der Schneidanlage 1 und der Abladerstation 2 das Sortierregal 3 angeordnet. Die Abladerstation 2 besteht im Wesentlichen aus dem Maschinenständer 4, dem Maschinenbett 5, dem horizontal und vertikal verfahrbar angeordneten Abladertisch 6, den in der Zeichnung nicht dargestellten Steuerungs- und Antriebsmitteln, Führungselementen 7 zur Führung und Positionierung von zwei Anschlägen 8, 9, die der Aufnahme, seitlichen Fixierung und dem Transport jeweils einer Lage vom Sortierregal 3 auf den Abladertisch 6 dienen. Um das Wirkungsfeld der Anschläge 8, 9 genügend groß zu gestalten, sind die Führungselemente 7 als Führungsschienen mit entsprechender Länge ausgebildet. Die Abladerstation 2 ist auf Führungsschienen entlang einer Reihe Aufnahmepaletten 10, die sich im Ausgangszustand außerhalb des Wirkungsbereiches der Abladerstation 2 befinden, horizontal verfahrbar angeordnet.

In der Zeichnung nicht dargestellt ist, dass das Sortierregal 3 vier Aufnahmeböden in zwei übereinander angeordneten Ebenen aufweist, die diagonal miteinander verbunden sind. Die beiden jeweils miteinander verbundenen Aufnahmeböden werden motorisch angetrieben, so dass die Aufnahmeböden in einem Gestell umlaufend in vorgegebenen Stellungen positioniert werden können. Immer dann, wenn einer der Aufnahmeböden vollständig beladen ist, kann er von der Beladeposition im Bedienerbereich in Übergabeposition vor die Abladerstation 2 verfahren werden. Dort wird jeweils eine Lage von der Abladerstation 2 übernommen und auf die der Lage zugeordnete Aufnahmepalette 10 abgesetzt. Der genaue Aufbau und die Funktionsweise des eingesetzten Sortierregals 3 ist in DE 102 28 165.3 ausführlich erläutert.

Die in Fig. 1 und 2 dargestellten vier Aufnahmepaletten 10 sind ebenfalls verfahrbar ausgebildet. Sie sind jeweils auf einem Palettenschlitten 11, der mit der Schlittenführung 12 in Wirkverbindung steht, angeordnet, werden motorisch angetrieben und sind mit einer zentralen Steuereinheit (in der Zeichnung nicht gezeigt) verbunden. Mittels einer an der Abladerstation 2 angeordneter Sensoranordnung (in der Zeichnung ebenfalls nicht dargestellt) wird die Stapelhöhe der jeweiligen Aufnahmepalette 10, auf die eine Lage abgesetzt werden soll, vorausbestimmt, die Positionierparameter berechnet und an die Abladerstation 2 übermittelt.

### Die Funktionsweise dieser Abladeanordnung ist folgende:

Nachdem in der Schneidanlage 1 Einzelnutzen unterschiedlicher Form, unterschiedlicher Größe oder beides hergestellt worden sind, legt der Bediener die Nutzen sortiert in das Sortierregal 3 ein. Wenn aus den Einzelnutzen einer Sorte eine Lage gebildet ist oder ein Aufnahmeboden des Sortierregals 3 gefüllt ist, wird dieser Aufnahmeboden in Übergabeposition vor die Abladerstation 2 verfahren. Die Anschläge 8, 9, werden in Übernahmeposition verfahren, fixieren zweiseitig die Lage und transportieren die Lage durch entsprechende Positionierbewegungen auf den Abladertisch 6.

Gleichzeitig mit dem Verfahren der Abladerstation 2 in Abladeposition unmittelbar über oder neben die jeweilige Aufnahmepalette 10 wird die benötigte Aufnahmepalette 10 in den Wirkungsbereich des Abladertisches 6 verbracht. Der Abladertisch 6 wird auf die Aufnahmepalette 10 oder auf den sich darauf befindlichen Papierstapel 13 positionsgenau abgesenkt, anschließend wird der Abladertisch 6 seitlich unter der Lage hervorgezogen und in Ausgangsstellung verbracht. Die Abladerstation 2 fährt zum erneuten Aufnehmen einer weiteren Lage in Ausgangsstellung zurück. Die Aufnahmepalette 10 nimmt entweder ebenfalls wieder Ausgangsstellung ein oder aber verbleibt zum erneuten Abladen einer gleichen Lage in Abladeposition.

Es kann sich als konstruktiv günstig und weniger aufwändig erweisen, wenn die Aufnahmepalette 10, die am weitesten von der Ausgangsposition der Abladerstation 2 entfernt angeordnet ist (letzte Aufnahmepalette 10) stationär ausgebildet ist, dass heißt, dass sich diese Aufnahmepalette 10 immer in Abladeposition befindet, unabhängig davon, wie hoch die Stapelhöhe der abgelegten Papierstapel 13 ist.

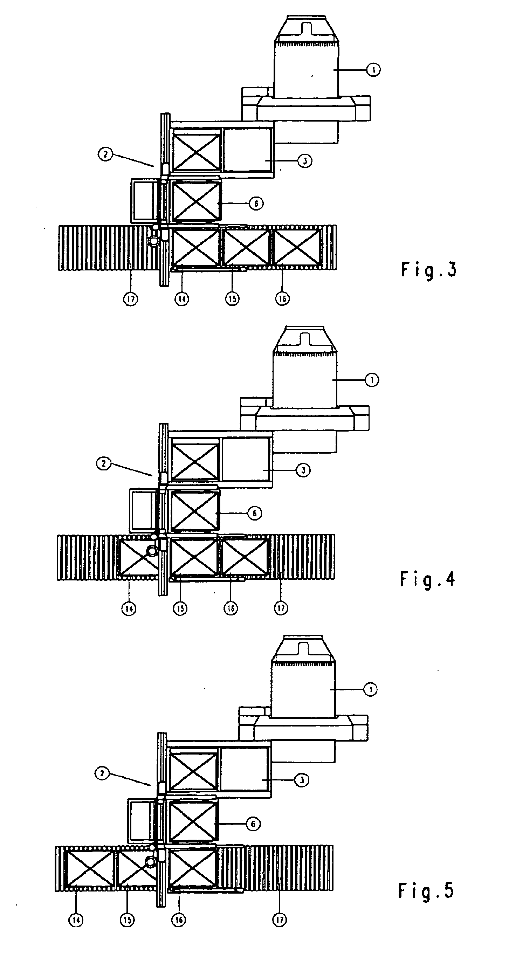

Die Fig. 3 bis 5 zeigen eine Abladeanordnung, die kein Teil der vorliegenden Erfindung ist. Hiernach ist die Abladerstation 2 stationär ausgebildet, lediglich die Anschläge 8, 9 und der Abladertisch 6 sind vertikal und/oder horizontal verfahrbar. Die in diesem Ausführungsbeispiel dargestellten drei Aufnahmepaletten 14, 15, 16 sind auf der angetriebenen und mit der zentralen Steuereinheit verbundenen Rollenbahn 17 geführt und einreihig außerhalb des Wirkungsbereiches des Abladertisches 6 angeordnet. Je nach Bedarf wird diejenige Aufnahmepalette 14 oder 15 oder 16 in Abladeposition unmittelbar unterhalb des Abladertisches 6 oder neben diesen verbracht, die für das Abladen der erfassten Lage benötigt wird. Auch hier ist es möglich, mehrere Abladevorgänge nacheinander auf die gleiche Aufnahmepalette 14 oder 15 oder 16 oder den darauf befindlichen Papierstapel 13 auszuführen.

Je nach vorhandenen Räumlichkeiten können die Aufnahmepaletten 14, 15, 16 einreihig - siehe Fig. 3 bis 5 - oder zweireihig angeordnet sein. Im ersten Fall werden mehrere freie Aufnahmepalettenplätze im Anschluss an die belegten Aufnahmepalettenplätze benötigt, da in der Regel die gesamte Reihe bewegt werden muss, wenn eine Aufnahmepalette 14 oder 15 oder 16 in Abladeposition gebracht wird. Die Fig. 3, 4 und 5, die die Aufnahmepaletten 14, 15, 16 in jeweils anderer Position zeigen, sollen der Verdeutlichung des Verfahrensablaufes dienen. Nach Fig. 3 ist Aufnahmepalette 14 in Abladeposition dargestellt, Fig. 4 zeigt Aufnahmepalette 15 in Abladeposition und nach Fig. 5 ist Aufnahmepalette 16 in Abladeposition.

Bei zweireihiger Anordnung werden Eckumsetzer und der Einsatz einer ungeradzahligen Anzahl von Aufnahmepaletten 14, 15, 16 erforderlich, da stets ein leerer Aufnahmepalettenplatz zur Verfügung stehen muss.

Die erfindungsgemäße Abladeanordnung des Anspruchs 2 weist eine stationär ausgebildete Abladerstation mit sternförmigangeordneten Aufnahmepaletten auf. Diese sternförmige Anordnung erfordert erhöhten konstruktiven Aufwand an Fördertechnik.

Der Einsatz von Förder- und Steuerungstechnik zur Realisierung des Bewegungsablaufes der Aufnahmepaletten 10, 14, 15, 16 ist bekannter Stand der Technik und auf vielfältige Art und Weise umsetzbar.

### Bezugszeichenliste

- 1: Schneidanlage
- 2: Abladerstation
- 3: Sortierregal
- 4: Maschinenständer
- 5: Maschinenbett
- 6: Abladertisch
- 7: Führungselemente
- 8: Anschlag
- 9: Anschlag
- 10: Aufnahmepalette
- 11: Palettenschlitten
- 12: Schlittenführung
- 13: Papierstapel
- 14: Aufnahmepalette
- 15: Aufnahmepalette
- 16: Aufnahmepalette
- 17: Rollenbahn

## Patentansprüche

1. Anordnung zum sortierten Abstapeln von in Form und/oder Größe unterschiedlicher Lagen aus blattförmigen Materialien, insbesondere zum Abstapeln von Papierlagen nach dem Beschneiden in einer Schneidemaschine, im Wesentlichen bestehend aus einer Bearbeitungsmaschine (1), einer Abladerstation (2) mit einem horizontal und vertikal verfahrbaren Abladertisch (6) und mehreren Aufnahmepaletten (10, 14, 15, 16) für die Lagen zur Bildung eines Stapels (13), wobei wenigstens ein Teil der Aufnahmepaletten (10, 14, 15, 16) mittels einer Steuerung automatisch horizontal verfahrbar ausgebildet ist und die Aufnahmepaletten (10, 14, 15, 16) in eine vorgegebene Abladeposition des Abladertisches (6) und nach wenigstens einem Abladevorgang wieder in Ausgangsstellung zurück verfahren, **dadurch gekennzeichnet, dass** die Abladerstation (2) entlang der außerhalb ihres Wirkungsbereiches aneinander gereihten Aufnahmepaletten (10, 14, 15, 16) horizontal verfahrbar ausgebildet ist.

2. Anordnung zum sortierten Abstapeln von in Form und/oder Größe unterschiedlicher Lagen aus blattförmigen Materialien, insbesondere zum Abstapeln von Papierlagen nach dem Beschneiden in einer Schneidemaschine, im Wesentlichen bestehend aus einer Bearbeitungsmaschine (1), einer stationär angeordneten Abladerstation (2) mit einem horizontal- und vertikal verfahrbaren Abladertisch (6) und mehreren Aufnahmepaletten (10, 14, 15, 16) für die Lagen zur Bildung eines Stapels (13), wobei wenigstens ein Teil der Aufnahmepaletten (10, 14, 15, 16) mittels einer Steuerung automatisch horizontal verfahrbar ausgebildet ist, **dadurch gekennzeichnet, dass** die Aufnahmepaletten (10, 14, 15, 16) sternförmig angeordnet und derart verfahrbar ausgebildet sind, dass die der abzuladenden Lage zugeordnete Aufnahmepalette (10, 14, 15, 16) automatisch in vorgegebene Abladeposition des Abladertisches (6) verbracht beziehungsweise nach wenigstens einem Abladevorgang wieder in Ausgangsstellung zurück verfahren wird.

3. Abladeanordnung nach Anspruch 1, **dadurch gekennzeichnet, dass** die Aufnahmepalette (10), die den größten Abstand zur Abladerstation (2) aufweist, stationär ausgebildet ist und im Wirkungsbereich der horizontal verfahrbaren Abladerstation (2) angeordnet ist.

4. Abladeanordnung nach einem der Ansprüche 1 bis 3, **dadurch gekennzeichnet, dass** die Aufnahmepaletten (10, 14, 15, 16) mittels Schlittenführung (12) verfahrbar sind.

5. Abladeanordnung nach einem der Ansprüche 1 bis 3, **dadurch gekennzeichnet, dass** die Aufnahmepaletten (10, 14, 15, 16) mittels Rollenführung verfahrbar sind.

6. Abladeanordnung nach einem der Ansprüche 1 bis 5, **dadurch gekennzeichnet, dass** die Abladeposition eine vorgegebene Position unter dem Abladertisch (6) ist.

7. Abladeanordnung nach einem der Ansprüche 1 bis 5, **dadurch gekennzeichnet, dass** die Abladeposition eine vorgegebene Position neben dem Abladertisch (6) ist.

8. Abladeanordnung nach einem der Ansprüche 1 bis 7, **dadurch gekennzeichnet, dass** die Stapelhöhe der Aufnahmepaletten (10, 14, 15, 16) mittels Sensoranordnung erfasst wird.

9. Abladeanordnung nach einem der Ansprüche 1 bis 8, **dadurch gekennzeichnet, dass** zwischen Bearbeitungsmaschine (1) und Abladerstation (2) ein Sortierregal (3) zum sortierten Zwischenlagern der in Form und/oder Größe unterschiedlichen Lagen angeordnet ist.

10. Abladeanordnung nach Anspruch 9, **dadurch gekennzeichnet, dass** das Sortierregal (3) derart ausgebildet ist, dass es aus vier Aufnahmeböden besteht, die in zwei übereinander angeordneten Ebenen in einem Gestell angeordnet sind, dass die in beiden Ebenen diagonal zueinander angeordneten Aufnahmeböden miteinander in Wirkverbindung stehen und dass die Aufnahmeböden automatisch umlaufend ausgebildet sind.

11. Abladeanordnung nach einem der Ansprüche 1 bis 10, **dadurch gekennzeichnet, dass** die Abladerstation (2) zwei abstandsweise und parallel zueinander angeordnete, variabel ein- und feststellbare sowie horizontal und vertikal verfahrbare Anschläge (8, 9) zum Ergreifen jeweils einer bearbeiteten Lage, zum Transport zur und zum Ablegen auf dem Abladertisch (6) aufweist.

12. Verfahren zum sortierten Abstapeln von in Form und/oder Größe unterschiedlicher Lagen aus blattförmigen Materialien, insbesondere zum Abstapeln von Papierlagen nach dem Beschneiden in einer Schneidemaschine, bei dem jeweils eine auf einem Abladertisch (6) einer horizontal verfahrbaren Abladerstation (2) fixierte Lage auf eine dieser Lage zugeordnete Aufnahmepalette (10, 14, 15, 16) oder einem bereits darauf befindlichen Materialstapel (13) positionsgenau abgeladen wird, **dadurch gekennzeichnet, dass** gleichzeitig mit dem Verfahren der Abladerstation (2) entlang der außerhalb ihres Wirkungsbereiches aneinander gereihten Aufnahmepaletten (10, 14, 15, 16) in Abladeposition auch die der abzuladenden Lage zugeordnete Aufnahmepalette (10, 14, 15, 16) in Abladeposition verfährt und nach wenigstens einem Abladevorgang die Aufnahmepalette (10, 14, 15, 16) wieder in Ausgangsstellung außerhalb des Wirkungsbereiches der Abladerstation (2) verfährt.

13. Verfahren nach Anspruch 12, **dadurch gekennzeichnet, dass** nach dem Bearbeiten die Lage in einem Sortierregal (3) sortiert abgelegt werden und die Lagen zum Abstapeln automatisch auf den Abladertisch (6) der Abladerstation aufgelegt werden.

14. Verfahren nach Anspruch 13, **dadurch gekennzeichnet, dass** die Lagen auf umlaufend angeordnete Aufnahmeböden des Sortierregals (3) aufgelegt, die Lagen in Abnahmeposition verfahren werden und von verfahrbaren Anschlägen (8, 9) der Abladerstation (2) ergriffen, fixiert und auf den Abladertisch (6) transportiert werden.

## Claims

1. Arrangement for the sorted stacking of layers of sheet materials of different size and/or shape, in particular for stacking pamper layers following trimming in a cutting machine, substantially comprising a processing machine (1), an unloader station (2) having an unloader table (6) that can be moved horizontally and vertically, and a plurality of holding pallets (10, 14, 15, 16) for the layers in order to form a stack (13), at least some of the holding pallets (10, 14, 15, 16) being constructed such that they can be moved horizontally and automatically by means of a control system, and the holding pallets (10, 14, 15, 16) moving into a predefined unloading position of the unloaded table (6) and, after at least one unloading operation, moving back into the initial position again, **characterized in that** the unloader station (2) is constructed such that it can be moved horizontally along the holding pallets (10, 14, 15, 16) lined up in a row outside its range of action.

2. Arrangement for the sorted stacking of layers of sheet materials of different size and/or shape, in particular for stacking paper layers hollowing trimming in a cutting machine, substantially comprising a processing machine (1), an unloader station (2) arranged to be stationary and having an unloader table (6) that can be moved horizontally and vertically, and a plurality of holding pallets (10, 14, 15, 16) for the layers in order to form a stack (13), at least some of the holding pallets (10, 14, 15, 16) being constructed such that they can be moved horizontally and automatically by means or a control system, **characterized in that** the holding pallets (10, 14, 15, 16) are arranged in the shape of a star and are constructed such that they can be moved in such a way that the holding pallet (10, 14, 15, 16) assigned to the layer to be unloaded can be brought automatically into a predefined unloading position of the unloader table (6) and, respectively, after at least one unloading operation, is moved back into the initial position again.

3. Unloading arrangement according to Claim 1, **characterized in that** the holding pallet (10) which is at the greatest distance from the unloader station (2) is constructed so as to be stationary and is arranged in the range of action of the unloader station (2) that can be moved horizontally.

4. Unloading arrangement according to one of Claims 1 to 3, **characterized in that** the holding pallets (10, 14, 15, 16) can be moved by means of a carriage guide (12).

5. Unloading arrangement according to one of Claims 1 to 3, **characterized in that** the holding pallets (10, 14, 15, 16) can be moved by means of a roller guide.

6. Unloading arrangement according to one of Claims 1 to 5, **characterized in that** the unloading position is a predefined position under the unloader table (6).

7. Unloading arrangement according to one of Claims 1 to 5, **characterized in that** the unloading position is a predefined position beside the unloader table (6).

8. Unloading arrangement according to one of Claims 1 to 7, **characterised in that** the stack height of the holding pallets (10, 14, 15, 16) is registered by means of a sensor arrangement.

9. Unloading arrangement according to one of Claims 1 to 8, **characterized in that** between processing machine (1) and unloader station (2) there is arranged a sorting rack (3) for the sorted intermediate storage of the layers of different shape and/or size.

10. Unloading arrangement according to Claim 9, **characterized in that** the sorting rack (3) is constructed in such a way that it comprises four holding trays, which are arranged in two planes arranged, one above the other in a frame, **in that** the holding trays arranged diagonally in relation to each other in both planes are operatively connected to each other, and **in that** the holding trays are constructed so as to circulate automatically.

11. Unloading arrangement according to one of Claims 1 to 10, **characterized in that** the unloader station (2) has two stops (8, 9) which are arranged at a distance from and parallel to each other, can be inserted and fixed variably and can be moved horizontally and vertically, to grip a processed layer in each case for transport to and deposition on the unloader table (6).

12. Method for the sorted stacking of layers of sheet materials of different size and/or shape, in particular for stacking paper layers following trimming in a cutting machine, in which in each case a layer fixed on an unloader table (6) of an unloader station (2) that can be moved horizontally is discharged in an accurate position onto a holding pallet (10, 14, 15, 16) assigned to this layer or a material stack (13) already located thereon, **characterized in that**, at the same time as the unloader station (2) is moved along the holding pallets (10, 14, 15, 16) lined up in a row outside its range of action, the holding pallet (10, 14, 15, 16) assigned to the layer to be unloaded also moves into the unloading position and, after at least one unloading operation, the holding pallet (10, 14, 15, 16) moves into the initial position again outside the range of action of the unloader station (2).

13. Method according to Claim 12, **characterized in that**, following processing, the layer is deposited in a sorted manner in a sorting rack (3) and the layers to be stacked are automatically deposited on the unloader table (6) of the unloader station.

14. Method according to Claim 13, **characterized in that** the layers are deposited on holding trays of the sorting rack (3) which are arranged so as to circulate, the layers are moved into a removal position and are gripped by movable stops (8, 9) of the unloader station (2), are fixed and transported onto the unloader table (6).

## Revendications

1. Agencement pour l'empilage sélectif de rames de tailles et/ou formes différentes, notamment pour l'empilage de rames de papier après la coupe dans une machine de coupe, consistant pour l'essentiel en une machine de traitement (1), un poste de déchargement (2) doté d'une table de déchargement (6) mobile dans le plan horizontal et vertical et en plusieurs palettes de collecte (10, 14, 15, 16) pour les rames en vue de former une pile (13), au moins une partie des palettes de collecte (10, 14, 15, 16) étant réalisée de façon à pouvoir se déplacer automatiquement dans le plan horizontal à l'aide d'un dispositif de commande et les palettes de collecte (10, 14, 15, 16) pouvant être déplacées dans une position de déchargement prédéfinie de la table de déchargement (6) et revenir dans la position de départ après au moins un processus de déchargement, **caractérisé en ce que** le poste de déchargement (2) est réalisé de façon à pouvoir être déplacé dans le plan horizontal le long des palettes de collecte (10, 14, 15, 16) rangées les unes contre les autres à l'extérieur de sa zone d'action.

2. Agencement pour l'empilage sélectif de rames de tailles et/ou formes différentes, notamment pour l'empilage de rames de papier après la coupe dans une machine de coupe, consistant pour l'essentiel en une machine de traitement (1), un poste de déchargement (2) stationnaire doté d'une table de déchargement (6) pouvant être déplacée dans le plan horizontal et vertical et en plusieurs palettes de collecte (10, 14, 15, 16) pour les rames en vue de former une pile (13), au moins une partie des palettes de collecte (10, 14, 15, 16) étant réalisée de façon à pouvoir se déplacer automatiquement dans le plan horizontal à l'aide d'un dispositif de commande, **caractérisé en ce que** les palettes de collecte (10, 14, 15, 16) sont disposées en étoile et peuvent être déplacées de telle sorte que à palette de collecte (10, 14, 15, 16) associée à la position de déchargement est amenée automatiquement dans la position de déchargement prédéfinie de la table de déchargement (6) et/ou est ramenée dans la position de départ après au moins un processus de déchargement.

3. Agencement de déchargement selon la revendication 1, **caractérisé en ce que** à palette de collecte (10) comportant le plus grand écart avec le poste de déchargement (2) est réalisée de façon stationnaire est disposée dans la zone d'action du poste de déchargement (2) pouvant être déplacé dans le plan horizontal.

4. Agencement de déchargement selon l'une quelconque des revendications 1 à 3, **caractérisé en ce que** les palettes de collecte (10, 14, 15, 16) peuvent être déplacées à l'aide d'un guide glissant (12).

5. Agencement de déchargement selon l'une quelconque des revendications 1 à 3, **caractérisé en ce que** les palettes de collecte (10, 14, 15, 16) peuvent être déplacées à l'aide de guides roulants.

6. Agencement de déchargement selon l'une quelconque des revendications 1 à 5, **caractérisé en ce que** la position de déchargement est une position prédéfinie située sous la table de déchargement (6).

7. Agencement de déchargement selon l'une quelconque des revendications 1 à 5, **caractérisé en ce que** la position de déchargement est une position prédéfinie située à côté de la table de déchargement (6).

8. Agencement de déchargement selon l'une quelconque des revendication 1 à 7, **caractérisé en ce que** la hauteur de la pile des palettes de collecte (10, 14, 15, 16) est détectée à l'aide d'un agencement de capteur.

9. Agencement de déchargement selon l'une quelconque des revendications 1 à 8, **caractérisé en ce qu'**une étagère de tri (3) est disposée entre la machine de traitement (1) et le poste de déchargement (2) pour l'entreposage temporaire sélectif des rames de différentes tailles et/ou formes.

10. Agencement de déchargement selon la revendication 9, **caractérisé en ce que** l'étagère de tri (3) est réalisée de telle sorte qu'elle se compose de quatre aires de collecte disposées dans un châssis dans deux plans superposés, que les zones de collecte disposées en diagonale dans les deux plans sont reliées de façon interactive entre elles et que les aires de collecte sont automatiquement réalisées de façon rotative.

11. Agencement de déchargement selon l'une quelconque des revendication 1, à 10, **caractérisé en ce que** le poste de déchargement (2) comporte deux butées (8, 9) disposées à une certaine distance l'une de l'autre et parallèlement l'une par rapport à l'autre et pouvant être déplacées tant dans le plan horizontal que vertical de façon à pouvoir réaliser un réglage et une fixation variables en vue de saisir respectivement une rame traitée, de la transporter et de la déposer sur la table de déchargement (6).

12. Procédé pour l'empilage sélectif de rames de tailles et/ou formes différentes, notamment pour l'empilage de rames de pipier après leur coupe dans une machine de coupe, dans lequel respectivement une rame fixée sur une table de déchargement (6) d'un poste de déchargement (2) pouvant être déplacé dans le plan horizontal est déchargée précisément sur une palette de collecte (10, 14, 15, 16) associée à cette rame ou sur une pile de matériau (13) se trouvant déjà dessus, **caractérisé en ce que** la palette de collecte (10, 14, 15, 16) associée à la rame à décharger est également déplacée dans la position de déchargement conjointement avec le déplacement du poste de déchargement (2) le long des palettes de collecte (10, 14, 15, 16) rangées les unes contre les autres en-dehors de sa zone d'action et **en ce que** la palette de collecte (10, 14, 15, 16) est ramenée dans la position de départ située en-dehors de la zone d'action du poste de déchargement (2) après au moins un processus de déchargement.

13. Procédé selon la revendication 12, **caractérisé en ce qu'**après le traitement, la rame est déchargée de façon sélective dans une étagère de tri (3) et **en ce que** les rames sont placées pour l'empilage automatique sur la table de déchargement (6) du poste de déchargement.

14. Procédé selon la revendications 13, **caractérisé en ce que** les rames sont placées sur des aires de collecte de l'étagère de tri (3) disposées de façon tournante, les rames étant déplacées dans la position de retrait et étant saisies et fixées par des butées (8, 9) mobiles du poste de déchargement (2) et transportées sur la table de déchargement (6).
